# EUROPÄISCHE PATENTSCHRIFT

(11) **EP 3 610 468 B1**
(45) Veröffentlichungstag und Bekanntmachung des Hinweises auf die Patenterteilung: **18.10.2023**
(21) Anmeldenummer: 18706983.6
(22) Anmeldetag: 15.02.2018
(51) Int. Cl.: G07F 17/00, B65B 35/02, B65B 5/10, A61J 3/00, G07F 11/44, B65D 83/04, G07F 11/00

(54) **VORRATSBEHÄLTER FÜR EINE VORRATS- UND ABGABESTATION**
STORAGE CONTAINER FOR A STORAGE AND DISPENSING STATION
RÉSERVOIR POUR STATION DE STOCKAGE ET DE DISTRIBUTION

(30) Priorität: 11.04.2017 EP 17166081
(43) Veröffentlichungstag der Anmeldung: 19.02.2020
(73) Patentinhaber: Becton Dickinson Rowa Germany GmbH, 53539 Kelberg (DE)
(72) Erfinder: GROSS, Dietmar, 53539 Kelberg (DE)
(74) Vertreter: Zenz Patentanwälte Partnerschaft mbB
(86) Internationale Anmeldenummer: PCT/EP2018/053747
(87) Internationale Veröffentlichungsnummer: WO 2018/188837

(56) Entgegenhaltungen:
- EP-A1- 2 345 399
- EP-A1- 2 572 995
- EP-A1- 2 664 316
- EP-A1- 2 804 156
- EP-A1- 2 962 956
- EP-A2- 2 752 181
- WO-A1-2015/068973
- JP-A- 2002 153 541
- JP-A- 2002 272 812
- US-A1- 2007 150 092
- US-A1- 2015 090 733

## Beschreibung

Die vorliegende Erfindung betrifft einen Vorratsbehälter für eine Vorrats- und Abgabestation für Stückgüter, insbesondere Arzneimittel.

Moderne Blisterautomaten, wie sie beispielsweise in der WO 2013/034504 A1 offenbart sind, umfassen, je nach Ausbaustufe, mehrere hundert Vorrats- und Abgabestationen. In diesen sind jeweils eine Mehrzahl von Arzneimittelportionen eines bestimmten Arzneimittels gelagert, und auf Anforderungen können einzelne Arzneimittelportionen abgegeben werden. Mit dem Blisterautomaten werden die in den Vorrats- und Abgabestationen gelagerten Arzneimittelportionen patientenindividuell gemäß den ärztlich verordneten Eingabezeitpunkten zusammengestellt und verblistert.

Zur Zusammenstellung der Arzneimittelportionen werden entsprechende Vorrats- und Abgabestationen zur Abgabe einer oder mehrerer vereinzelter Arzneimittelportionen angesteuert. Bei der Ansteuerung einer Vorrats- und Abgabestation wird mit einer Vereinzelungseinrichtung eine einzelne Arzneimittelportion separiert und über eine Abgabeöffnung einer Führungseinrichtung des Blisterautomaten übergeben. Mittels der Führungseinrichtung wird eine abgegebene Arzneimittelportion, gegebenenfalls unter Zwischenschaltung einer Sammeleinrichtung, einer Verpackungseinrichtung zugeführt, welche einzelne oder mehrere Arzneimittelportionen entsprechend der ärztlichen Vorgabe verblistert.

Zur Vereinzelung der Arzneimittelportionen, die in einem Vorratsbehälter einer Vorrats- und Abgabestation gelagert sind, umfasst die Vereinzelungseinrichtung einen Rotor mit einer Vielzahl von Kanälen, die üblicherweise am Außenumfang des Rotors angeordnet sind. Die Kanäle sind an die jeweils zu separierenden Arzneimittelportionen hinsichtlich ihrer Abmessungen derart angepasst, dass in einem Kanal die Arzneimittelportionen lediglich übereinander, nicht aber nebeneinander angeordnet sein können. Die Kanäle können auch derart bemessen sein, dass in einen Kanal lediglich eine Arzneimittelportion aufgenommen werden kann.

Zur Abgabe einer Arzneimittelportion aus einem Kanal wird ein Kanal über eine Abgabeöffnung in dem Gehäuse des Vorratsbehälters bewegt, und die in dem Kanal an unterster Stelle angeordnete Arzneimittelportion rutscht bzw. fällt in die Abgabeöffnung. Um zu vermeiden, dass weitere in dem oder über dem Kanal lagernde Arzneimittelportionen ebenfalls abgegeben werden, ist in dem Bereich über der Abgabeöffnung ein Rückhalteabschnitt eines Rückhaltemittels zumindest in oder über den Kanal geführt bzw. angeordnet, der an der Abgabeöffnung ausgerichtet ist. Dieser Rückhalteabschnitt ist in Bezug auf die Höhe des Kanals derart in diesem oder über diesem angeordnet, dass unter dem Rückhalteabschnitt lediglich eine Arzneimittelportion angeordnet sein kann. Sofern der Rückhalteabschnitt in den Kanal geführt ist, um die unterste Arzneimittelportion von darüber angeordneten zu trennen, weisen einzelne Kanäle separierende Vorsprünge einen Schlitz auf, welcher den Rückhalteabschnitt aufnimmt. Sofern der Rückhalteabschnitt über den Kanälen angeordnet bzw. geführt ist, ist dieser regelmäßig nur geringfügig über den oberen Enden der Vorsprünge geführt, so dass vermieden wird, dass bei Abgabe der Arzneimittelportion weitere Arzneimittelportionen in den Kanal gelangen.

Der Rückhalteabschnitt des Rückhaltemittels ist bei bekannten Vorrats- und Abgabestationen von außen durch einen horizontalen Gehäuseschlitz in den Vorratsbehälter geführt, und zwar derart, dass der Rückhalteabschnitt, in Abhängigkeit von der Gestaltung der Kanäle, über diesen oder in einem Schlitz in den Kanälen angeordnet ist. Wie bereits oben dargelegt, sind die Kanäle und damit die die Kanäle definierenden Vorsprünge an die Abmessungen der jeweils zu vereinzelnden Arzneimittelportionen angepasst. Dies bedeutet unter anderem, dass die Vorsprünge bei unterschiedlichen Arzneimittelportionen unterschiedlich hoch sind. Können mehrere Arzneimittelportionen in einem Kanal aufgenommen werden, ist auch die Lage des Schlitzes, in welchen der Rückhalteabschnitt des Rückhaltemittels eingreift, von den Abmessungen der Arzneimittelportionen abhängig. Dies bedingt, dass die Position des horizontalen Schlitzes in dem Gehäuse ebenfalls von den Abmessungen der Arzneimittelportionen abhängig ist, so dass bei unterschiedlichen Arzneimittelportionen unterschiedliche Gehäuse zu verwenden sind. Mit anderen Worten, das gleiche Gehäuse kann nicht mit Arzneimittelportionen mit unterschiedlichen Abmessungen genutzt werden.

Die WO 2015/068973 A1 offenbart einen Tablettenbehälter mit einem variablen Teilungsblock. Der Tablettenbehälter umfasst einen Aufbewahrungsteil, in dem eine Tablette aufbewahrt wird, und einen Teilungsblock, der sich um eine zentrale Achse dreht und eine Vielzahl von Unterteilungselementen umfasst, die in einem vorbestimmten Abstand voneinander um eine äußere Umfangsfläche davon angeordnet sind. Ein Tablettenaufnahmeteil, der durch einen Zwischenraum zwischen den Trennelementen definiert ist, nimmt die Tablette auf, die aus dem Aufbewahrungsteil fällt. Der Tablettenbehälter umfasst auch ein Gehäuse mit einer darin definierten Auslassöffnung, durch die die im Tablettenaufnahmeteil aufgenommene Tablette nach außen abgegeben wird. Jedes der Trennelemente ist von der äußeren Umfangsfläche des Teilungsblocks abnehmbar.

Aus der US 2015/0090733 A1 ist ein Vorratsbehälter mit einem höhenverstellbaren Rückhaltemittel bekannt, wobei ein Abschnitt des Rückhaltemittels durch einen vertikalen Schlitz in dem Gehäuse geführt ist. Auch aus der EP 2 752 181 A2 ist ein Vorratsbehälter mit einem höhenverstellbaren Rückhaltemittel bekannt, das aber in einer Abdeckung geführt ist, die in einer Gehäuseöffnung angeordnet ist.

Es ist daher Aufgabe der vorliegenden Erfindung, einen konstruktiv einfachen Vorratsbehälter für eine Vorrats- und Abgabestation bereitzustellen, welcher für Arzneimittelportionen mit unterschiedlichen Abmessungen genutzt werden kann und bei welchem kein Arzneimittelstaub austreten kann.

Die Aufgabe wird gelöst durch einen Vorratsbehälter gemäß Patentanspruch 1 oder 2. Der erfindungsgemäße Vorratsbehälter für eine Vorrats- und Abgabestation für Arzneimittel umfasst ein einen Aufnahmeraum für Arzneimittelportionen umschließendes Gehäuse mit einem Führungsabschnitt und einer Bodenfläche, wobei der Führungsabschnitt einen üblicherweise kreiszylinderförmigen Führungsraum definiert und einen das Gehäuse nicht durchdringenden vertikalen Führungsrücksprung aufweist und wobei die Bodenfläche eine Abgabeöffnung aufweist. Der Vorratsbehälter umfasst ferner eine in dem Führungsabschnitt des Gehäuses angeordnete Vereinzelungseinrichtung mit zumindest einem Kanal zur Aufnahme zumindest einer Arzneimittelportion sowie ein Rückhaltemittel mit einem Rückhalteabschnitt, wobei das Gehäuse keinen Schlitz aufweist und der Rückhalteabschnitt vollständig innerhalb des Führungsabschnitts angeordnet und oberhalb der Abgabeöffnung gehalten ist und einen Eintritt weiterer Arzneimittelportionen in einen an der Abgabeöffnung ausgerichteten Kanal verhindert. Ob der Rückhalteabschnitt des Rückhaltemittels über dem zumindest einen Kanal oder in einem Schlitz von den Kanälen definierenden Vorsprüngen gehalten bzw. geführt ist, ist abhängig von der genauen Gestaltung der Kanäle und hat keinen Einfluss auf die Erfindung als solche.

Das Rückhaltemittel umfasst ferner ein Führungsmittel, wobei das Führungsmittel in dem vertikalen Führungsrücksprung angeordnet ist und wobei der vertikale Führungsrücksprung und das Führungsmittel derart zusammenwirken, dass das Rückhaltemittel höhenverstellbar in der Führungsausnehmung angeordnet bzw. gelagert ist und gleichzeitig eine Drehbewegung bzw. eine kreisförmige Bewegung des Rückhaltemittels verhindert wird.

Das Rückhaltemittel ist innerhalb des Vorratsbehälters höhenverstellbar, wozu ein vertikaler Führungsrücksprung in dem Führungsabschnitt vorgesehen ist, wobei der Führungsrücksprung mit einem entsprechenden Führungsmittel des Rückhalteabschnittes zusammenwirkt, um die notwendige Höhenverstellbarkeit zu gewährleisten. Der vertikale Führungsrücksprung und das Führungsmittel sind so ausgebildet, dass ein radialer Versatz und eine Umfangsbewegung bzw. kreisförmige Bewegung des Führungsmittels innerhalb des Führungsabschnitts bzw. Führungsraums vermieden wird. Dass diese Bewegung verhindert wird, ist wesentlich, da der Rückhalteabschnitt des Rückhaltemittels stets an bzw. in dem Kanal ausgerichtet bzw. angeordnet sein muss, der an der Abgabeöffnung in der Bodenfläche ausgerichtet ist.

Bei dem erfindungsgemäßen Vorratsbehälter ist kein Schlitz in dem Gehäuse vorgesehen. Das hat den Vorteil, dass kein sich in der Vorrats- und Abgabestation bildender Arzneimittelstaub bzw. -abrieb nach außen treten kann. Dies ist insbesondere vor dem Hintergrund wesentlich, dass moderne Blisterautomaten gelegentlich in hochreinen Räumen verwendet werden, bei welchen ein Austritt von Arzneimittelabrieb einen erhöhten Reinigungsbedarf bedingt.

Die genaue Ausbildung des Führungsrücksprungs und des Führungsmittels sind nicht erfindungswesentlich, solange es gewährleistet ist, dass das Rückhaltemittel über die Kombination Führungsrücksprung/Führungsmittel einerseits höhenverstellbar ist, andererseits radial und am Umfang bzw. kreisförmig nicht bewegbar ist.

Erfindungsgemäß sind das Führungsmittel und der Führungsrücksprung über eine Schwalbenschwanzverbindung gekoppelt. Alternativ ist es vorgesehen, dass das Führungsmittel und der Führungsrücksprung über magnetische Haltemittel gekoppelt sind. Wenn der Rückhalteabschnitt in einem Schlitz der Vorsprünge der Vereinzelungseinrichtung gehalten ist, kann es auch ausreichend sein, wenn die Seitenflächen des Führungsrücksprungs senkrecht parallel zueinander ausgebildet sind. Die beiden vorgenannten Alternativen sind konstruktiv einfach gehalten.

Der Führungsrücksprung durchdringt das Gehäuse bzw. den Führungsabschnitt nicht. Um zu vermeiden, dass das Gehäuse im gesamten Bereich des Führungsabschnitts eine Wandstärke aufweist, die die Ausbildung eines Rücksprungs ermöglicht, ist es erfindungsgemäß vorgesehen, dass das Gehäuse (lediglich) im Bereich des Führungsabschnitts einen Vorsprung (also eine Gehäusewandverstärkung) aufweist, in welchem der Führungsrücksprung angeordnet ist.

Das Führungsmittel ist in dem Führungsrücksprung höhenverstellbar angeordnet. Schwerkraftbedingt liegt der Rückhalteabschnitt entweder auf der Vereinzelungseinrichtung auf oder ist in einem horizontalen Schlitz, der die Vorsprünge teilt, gehalten. Mit anderen Worten, das Führungsmittel ist in dem Führungsabschnitt zwar höhenverstellbar, aber nicht unbedingt höhenfixierbar angeordnet. Um auch eine Höhenfixierbarkeit zu ermöglichen, kann es bei einer bevorzugten Ausführungsform vorgesehen sein, dass der Führungsrücksprung und das Führungsmittel Rastmittel aufweisen, die eine solche Höhenfixierbarkeit ermöglichen.

Erfindungsgemäß ist das Führungsmittel in dem Führungsrücksprung angeordnet, welcher wiederrum in dem Führungsabschnitt ausgebildet ist. Der Führungsabschnitt definiert den üblicherweise kreiszylinderförmigen Führungsraum. Konstruktionsbedingt verhält es sich also so, dass der Führungsrücksprung den ansonsten kreiszylinderförmigen Führungsraum "unterbricht". Um zu vermeiden, dass diese Unterbrechung Arzneimittelportionen beschädigt oder sich Staub in dieser ansammelt, ist es bei einer bevorzugten Ausführungsform vorgesehen, dass die dem Führungsraum zugewandte Oberfläche des Führungsmittels eine kreiszylinderförmige Kontur aufweist.

Im Nachfolgenden werden bevorzugte Ausführungsformen des erfindungsgemäßen Vorratsbehälters für Vorrats- und Abgabestationen unter Bezugnahme auf die beigefügte Zeichnung beschrieben, in welcher
Figuren 1a-1d verschiedene Ansichten einer ersten bevorzugten Ausführungsform des erfindungsgemäßen Vorratsbehälters zeigen;
Figuren 2a-2c verschiedene Schnittansichten der ersten Ausführungsform des Vorratsbehälters zeigen, und
Figur 3 eine Schnittansicht einer zweiten bevorzugten Ausführungsform zeigt.

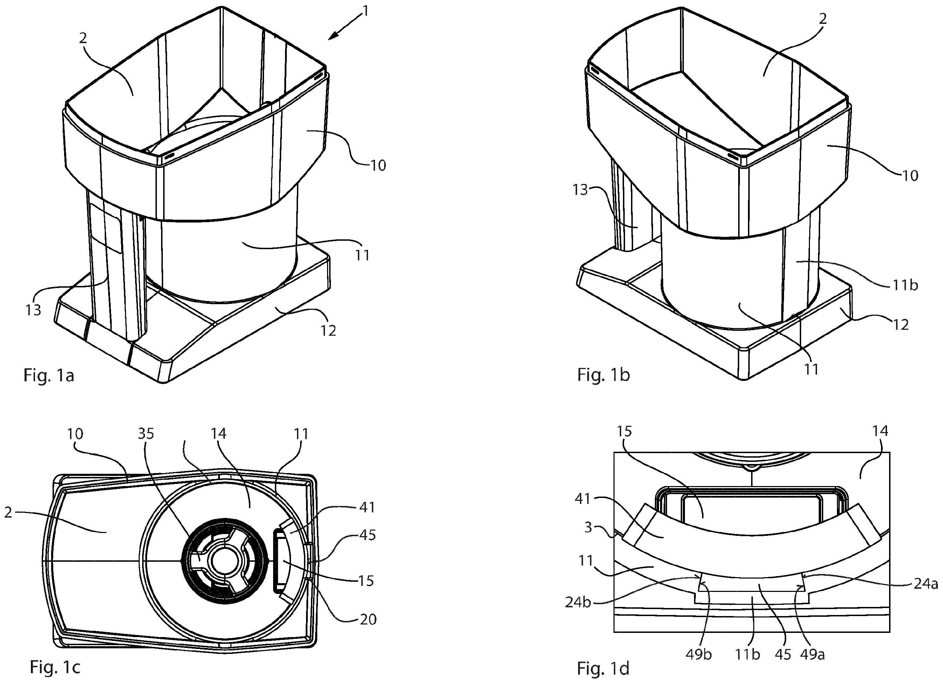

Die Figuren 1a und 1b zeigen zwei Schrägansichten einer ersten bevorzugten Ausführungsform des Vorratsbehälters 1 für eine Vorrats- und Abgabestation für Arzneimittel. Die Figur 1c zeigt eine Draufsicht auf den Vorratsbehälter, und Figur 1d zeigt eine Detailansicht von Figur 1c. Bei sämtlichen Darstellungen des Vorratsbehälters ist zur besseren Einsicht eine Abdeckung fortgelassen, die im üblichen Betrieb eines Vorratsbehälters vorgesehen ist. Der in den Figuren 1a-1c gezeigte erfindungsgemäße Vorratsbehälter ist Teil einer Vorrats- und Abgabestation für Arzneimittel, wobei, wie dies bereits der Name verdeutlich, in dem Vorratsbehälter die zu vereinzelnden Arzneimittelportionen gelagert sind. Der Vorratsbehälter 1 umfasst ferner eine Vereinzelungseinrichtung, die Teil einer sich über den Vorratsbehälter und einen Abgabeteil erstreckenden Vereinzelungsmechanik ist, und die unter Bezugnahme auf nachfolgende Figuren genauer beschrieben wird. Das Abgabeteil kann beispielsweise eine Steuerung und einen Antrieb für die Vereinzelungseinrichtung umfassen.

Der Vorratsbehälter selbst umfasst ein einen Aufnahmeraum 2 für (nicht dargestellte) Arzneimittelportionen umschließendes Gehäuse 10, welches im mittleren Bereich einen Führungsabschnitt 11 und darunter einen Fußabschnitt 12 umfasst. Der Führungsabschnitt definiert einen weitgehend kreiszylinderförmigen Führungsraum, in welchem, wie dies weiter unten beschrieben ist, die Vereinzelungseinrichtung angeordnet ist. "Weitgehend" kreisförmig deshalb, weil, wie dies ebenfalls weiter unten detaillierter beschrieben wird, in dem Führungsabschnitt ein Führungsrücksprung vorgesehen ist, der einen vollständigen Kreiszylinder im Inneren des Führungsabschnitts unterbricht. Das Gehäuse des Vorratsbehälters umfasst ferner einen Griff 13, mit dem der Vorratsbehälter 1 einfach von dem Abgabeteil der Vorrats- und Abgabestation heruntergenommen werden kann.

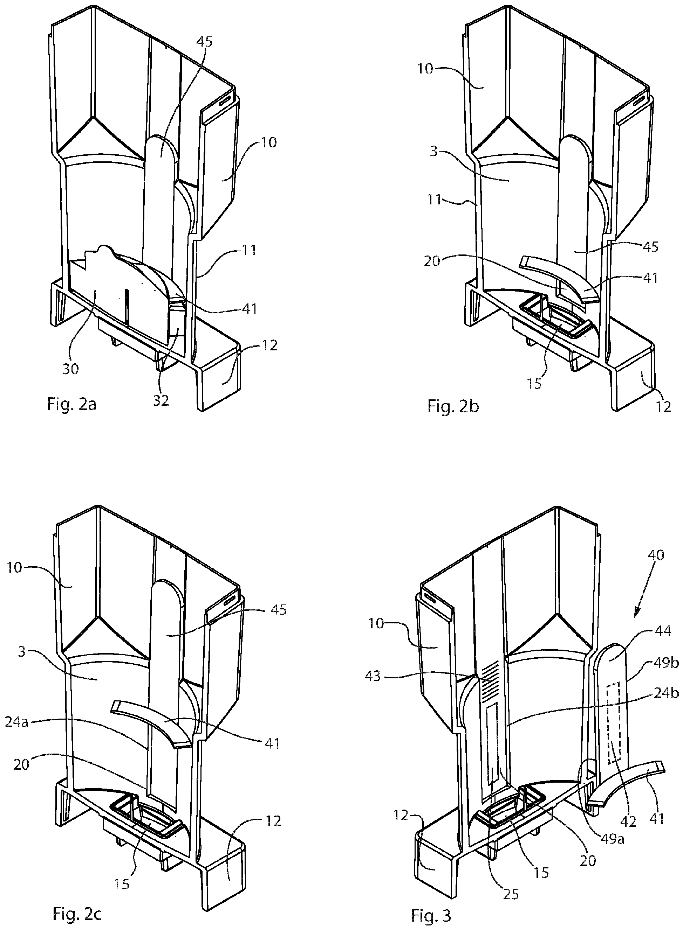

Wie dies in Figur 1c zu erkennen ist, ist der Führungsraum 3 bzw. der Führungsabschnitt 11 des Gehäuses nach unten durch eine Bodenfläche 14 abgeschlossen, die eine Abgabeöffnung 15 sowie eine zentrale Öffnung umfasst, wobei bei Figur 1c in dieser zentralen Öffnung ein Kopplungsmittel 35 der in dem Führungsraum 3 angeordneten Vereinzelungseinrichtung 30 (siehe Figur 2a) dargestellt ist.

Bei Figur 1c ist im rechten Bereich des Führungsabschnitts 11 des Gehäuses ein Rückhaltemittel angeordnet, dessen Rückhalteabschnitt 41 an der Bodenöffnung 15 ausgerichtet ist. Der Rückhalteabschnitt verschließt einen an der Abgabeöffnung 15 ausgerichteten Kanal, so dass keine weiteren Arzneimittelportionen in den an der Abgabeöffnung 15 ausgerichteten Kanal eindringen können (siehe dazu auch 4a, 4b). Das Rückhaltemittel ist über ein Führungsmittel 45 in einem Führungsrücksprung 20 in Führungsabschnitt 11 gelagert, wobei die Ausbildung des Führungsrücksprungs 20 sowie des Führungsmittels 45 dafür Sorge tragen, dass das Führungsmittel bei einer Drehung der Vereinzelungseinrichtung radial nicht versetzt wird, sprich sich nicht mit der Vereinzelungseinrichtung in Umfangsrichtung bewegt, sondern stets an der Abgabeöffnung ausgerichtet ist.

Figur 1d zeigt im Detail die genaue Ausgestaltung des Führungsabschnitts 11 im Bereich des Führungsrücksprungs 20 sowie des Führungsmittels 45. Die beiden vorgenannten Bauteile sind über eine Schwalbenschwanzverbindung miteinander gekoppelt, die dafür Sorge trägt, dass das Führungsmittel 45 radial und in Umfangsrichtung nicht verschiebbar ist, in der Höhe (also axial) jedoch bewegbar ist (also eine radial und umfangsmäßig formschlüssige Verbindung vorliegt). Zur Ausbildung der Schwalbenschwanzverbindung sind den Führungsrücksprung 20 definierende Seitenwände 24a, 24b sowie das Führungsmittel begrenzende Seitenwände 49a, 49b entsprechend konisch, nach innen aufeinander zulaufend ausgebildet.

Figuren 2a-2c zeigen verschiedene Schnittansichten der ersten Ausführungsform des erfindungsgemäßen Vorratsbehälters. Bei Figur 2a ist zu erkennen, dass der Rückhalteabschnitt 41 des Rückhaltemittels über den Vorsprüngen 32 der Vereinzelungseinrichtung 30 gehalten ist. Bei den Figuren 2a-2c ist ebenfalls die vertikale Führungsausnehmung 20 in dem Führungsabschnitt 11 des Vorratsbehälters zu erkennen. Bei der gezeigten Ausführungsform ist das Führungsmittel 45 über eine Schwalbenschwanzverbindung in dem Führungsrücksprung gehalten. Der Führungsrücksprung 20 selbst durchdringt die Wandung des Führungsabschnitts 11 nicht, ein Austritt von Arzneimittelstaub wird also, im Gegensatz zu Vorratsbehältern nach dem Stand der Technik, vermieden.

Figur 3 zeigt eine Schnittansicht einer zweiten bevorzugten Ausführungsform. Bei dieser zweiten Ausführungsform ist das Führungsmittel nicht nur höhenverstellbar, sondern auch höhenfixierbar. Die Höhenfixierbarkeit wird erreicht über Rastmittel 43, die an der Rückwand des Führungsvorsprungs 20 angeordnet sind und mit entsprechenden (nicht dargestellten) Rastmitteln an bzw. in der der Rückwand zugewandten Seite des Führungsmittels zusammenwirken. Die Höhenfixierbarkeit kann ferner durch magnetisch wirkende Haltemittel 25, 42 erzielt werden, die in der Rückwand und dem Führungsmittel 45 angeordnet sind. Diese können auch für eine Kopplung des Führungsmittels in dem Führungsvorsprung verwendet werden. Die magnetischen Haltemittel können also für eine Fixierung in axialer, radialer und in Umfangsrichtung genutzt werden. Die beiden vorgenannten Ausführungen der axialen Fixierung sind aus rein beschreibungstechnischen Gründen in einer Zeichnung bzw. einer Ausführungsform dargestellt, rein praktisch werden diese beiden Arten der Fixierung üblicherweise wohl alternativ verwendet werden.

## Patentansprüche

1. Vorratsbehälter (1) für eine Vorrats- und Abgabestation für Arzneimittel, aufweisend:
ein einen Aufnahmeraum (2) für Arzneimittelportionen umschließendes Gehäuse (10) mit einem Führungsabschnitt (11) und einer Bodenfläche (14), wobei der Führungsabschnitt (11) einen Führungsraum (3) definiert und einen das Gehäuse nicht durchdringenden vertikalen Führungsrücksprung (20) aufweist und wobei die Bodenfläche (14) eine Abgabeöffnung (15) aufweist,
eine in dem Führungsraum (3) des Gehäuses (10) angeordnete Vereinzelungseinrichtung (30) mit zumindest einem Kanal (31) zur Aufnahme zumindest einer Arzneimittelportion, und
ein Rückhaltemittel (40) mit
einem Rückhalteabschnitt (41), wobei das Gehäuse (10) keinen Schlitz aufweist und der Rückhalteabschnitt (41) vollständig innerhalb des Führungsraums (3) angeordnet und oberhalb der Abgabeöffnung (15) gehalten ist und einen Eintritt weiterer Arzneimittelportionen in einen an der Abgabeöffnung (15) ausgerichteten Kanal (31) verhindert, und
einem Führungsmittel (45), wobei das Führungsmittel (45) in dem Führungsrücksprung (20) angeordnet ist und wobei der vertikale Führungsrücksprung (20) und das Führungsmittel (45) derart zusammenwirken, dass das Rückhaltemittel (40) über das Führungsmittel (45) höhenverstellbar im Führungsrücksprung (20) angeordnet ist und eine Drehbewegung des Rückhaltemittels (40) verhindert ist,
**dadurch gekennzeichnet, dass** das Führungsmittel (45) und der Führungsrücksprung (20) über eine Schwalbenschwanzverbindung (49a, 49b, 24a, 24b) gekoppelt sind, und dass das Gehäuse (10) im Bereich des Führungsabschnitts (11) einen Vorsprung (11b) aufweist, in welchem der Führungsrücksprung (20) angeordnet ist.

2. Vorratsbehälter (1) für eine Vorrats- und Abgabestation für Arzneimittel, aufweisend:
ein einen Aufnahmeraum (2) für Arzneimittelportionen umschließendes Gehäuse (10) mit einem Führungsabschnitt (11) und einer Bodenfläche (14), wobei der Führungsabschnitt (11) einen Führungsraum (3) definiert und einen das Gehäuse nicht durchdringenden vertikalen Führungsrücksprung (20) aufweist und wobei die Bodenfläche (14) eine Abgabeöffnung (15) aufweist,
eine in dem Führungsraum (3) des Gehäuses (10) angeordnete Vereinzelungseinrichtung (30) mit zumindest einem Kanal (31) zur Aufnahme zumindest einer Arzneimittelportion, und
ein Rückhaltemittel (40) mit
einem Rückhalteabschnitt (41), wobei das Gehäuse (10) keinen Schlitz aufweist und der Rückhalteabschnitt (41) vollständig innerhalb des Führungsraums (3) angeordnet und oberhalb der Abgabeöffnung (15) gehalten ist und einen Eintritt weiterer Arzneimittelportionen in einen an der Abgabeöffnung (15) ausgerichteten Kanal (31) verhindert, und
einem Führungsmittel (45), wobei das Führungsmittel (45) in dem Führungsrücksprung (20) angeordnet ist und wobei der vertikale Führungsrücksprung (20) und das Führungsmittel (45) derart zusammenwirken, dass das Rückhaltemittel (40) über das Führungsmittel (45) höhenverstellbar im Führungsrücksprung (20) angeordnet ist und eine Drehbewegung des Rückhaltemittels (40) verhindert ist,
**dadurch gekennzeichnet, dass** das Führungsmittel (45) und der Führungsrücksprung (20) über magnetisch wirkende Haltemittel (25, 42) gekoppelt sind, und dass das Gehäuse (10) im Bereich des Führungsabschnitts (11) einen Vorsprung (11b) aufweist, in welchem der Führungsrücksprung (20) angeordnet ist.

3. Vorratsbehälter (1) für eine Vorrats- und Abgabestation für Arzneimittel nach einem der Ansprüche 1 oder 2, **dadurch gekennzeichnet, dass** der Führungsrücksprung (20) und das Führungsmittel (45) Rastmittel (43) aufweisen.

4. Vorratsbehälter (1) für eine Vorrats- und Abgabestation für Arzneimittel nach einem der Ansprüche 1 - 3, **dadurch gekennzeichnet, dass** der Führungsraum (3) kreiszylinderförmig ist und die dem Führungsraum (3) zugewandte Oberfläche des Führungsmittels (45) eine kreiszylinderförmige Kontur aufweist.

## Claims

1. A storage container (1) for a storage and dispensing station for drugs, comprising:
a housing (10) enclosing a holding space (2) for drug portions with a guide section (11) and a bottom surface (14), wherein the guide section (11) defines a guide space (3) and has a vertical guide recess (20) which does not penetrate the housing, and wherein the bottom surface (14) has a dispensing opening (15),
a separating device (30) arranged in the guide space (3) of the housing (10) and having at least one channel (31) for receiving at least one drug portion, and
a retaining means (40) with
a retaining section (41), wherein the housing (10) does not have a slot and the retaining section (41) is arranged completely within the guide space (3) and is held above the dispensing opening (15) and prevents an entry of further drug portions into a channel (31) aligned with the dispensing opening (15), and
a guide means (45), wherein the guide means (45) is arranged in the guide recess (20), and wherein the vertical guide recess (20) and the guide means (45) cooperate in such a way that the retaining means (40) is arranged vertically adjustably via the guide means (45) in the guide recess (20) and a rotational movement of the retaining means (40) is prevented, **characterized in that** the guide means (45) and the guide recess (20) are coupled by means of a dovetail connection (49a, 49b, 24a, 24b), and that the housing (10) has, in the region of the guide section (11), a projection (11b) in which the guide recess (20) is arranged.

2. A storage container (1) for a storage and dispensing station for drugs, comprising:
a housing (10) enclosing a holding space (2) for drug portions with a guide section (11) and a bottom surface (14), wherein the guide section (11) defines a guide space (3) and has a vertical guide recess (20) which does not penetrate the housing, and wherein the bottom surface (14) has a dispensing opening (15),
a separating device (30) arranged in the guide space (3) of the housing (10) and having at least one channel (31) for receiving at least one drug portion, and
a retaining means (40) with
a retaining section (41), wherein the housing (10) does not have a slot and the retaining section (41) is arranged completely within the guide space (3) and is held above the dispensing opening (15) and prevents an entry of further drug portions into a channel (31) aligned with the dispensing opening (15), and
a guide means (45), wherein the guide means (45) is arranged in the guide recess (20), and wherein the vertical guide recess (20) and the guide means (45) cooperate in such a way that the retaining means (40) is arranged vertically adjustably via the guide means (45) in the guide recess (20) and a rotational movement of the retaining means (40) is prevented, **characterized in that** the guide means (45) and the guide recess (20) are coupled via magnetically acting holding means (25, 42), and that the housing (10) has, in the region of the guide section (11), a projection (11b) in which the guide recess (20) is arranged.

3. The storage container (1) for a storage and dispensing station for drugs according to one of claims 1 or 2, **characterized in that** the guide recess (20) and the guide means (45) have locking means (43).

4. The storage container (1) for a storage and dispensing station for drugs according to one of claims 1-3, **characterized in that** the guide space (3) is circular cylindrical and the surface of the guide means (45) facing the guide space (3) has a circular cylindrical contour.

## Revendications

1. Réservoir (1) pour une station de stockage et de distribution de médicaments, présentant :
un boîtier (10) entourant un espace de réception (2) pour des portions de médicaments, avec une section de guidage (11) et une surface de fond (14), la section de guidage (11) définissant un espace de guidage (3) et présentant un retrait de guidage vertical (20) ne traversant pas le boîtier et la surface de fond (14) présentant une ouverture de distribution (15),
un dispositif de séparation (30) disposé dans l'espace de guidage (3) du boîtier (10) avec au moins un canal (31) pour recevoir au moins une portion de médicament, et
un moyen de retenue (40) comprenant
une section de retenue (41), le boîtier (10) ne présentant pas de fente et la section de retenue (41) étant disposée entièrement à l'intérieur de l'espace de guidage (3) et maintenue au-dessus de l'ouverture de distribution (15) et empêchant une entrée d'autres portions de médicament dans un canal (31) aligné sur l'ouverture de distribution (15), et
un moyen de guidage (45), le moyen de guidage (45) étant disposé dans le retrait de guidage (20) et le retrait de guidage vertical (20) et le moyen de guidage (45) coopérant de telle sorte que le moyen de retenue (40) est disposé dans le retrait de guidage (20) de manière réglable en hauteur par l'intermédiaire du moyen de guidage (45) et qu'un mouvement de rotation du moyen de retenue (40) est empêché ,
**caractérisé en ce que** le moyen de guidage (45) et le retrait de guidage (20) sont couplés par une liaison en queue d'aronde (49a, 49b, 24a, 24b), et **en ce que** le boîtier (10) présente, dans la zone de la section de guidage (11), une saillie (11b) dans laquelle le retrait de guidage (20) est disposé.

2. Réservoir (1) pour une station de stockage et de distribution de médicaments, présentant :
un boîtier (10) entourant un espace de réception (2) pour des portions de médicaments, avec une section de guidage (11) et une surface de fond (14), la section de guidage (11) définissant un espace de guidage (3) et présentant un retrait de guidage vertical (20) ne traversant pas le boîtier et la surface de fond (14) présentant une ouverture de distribution (15),
un dispositif de séparation (30) disposé dans l'espace de guidage (3) du boîtier (10) avec au moins un canal (31) pour recevoir au moins une portion de médicament, et
un moyen de retenue (40) comprenant
une section de retenue (41), le boîtier (10) ne présentant pas de fente et la section de retenue (41) étant disposée entièrement à l'intérieur de l'espace de guidage (3) et maintenue au-dessus de l'ouverture de distribution (15) et empêchant une entrée d'autres portions de médicament dans un canal (31) aligné sur l'ouverture de distribution (15), et
un moyen de guidage (45), le moyen de guidage (45) étant disposé dans le retrait de guidage (20) et le retrait de guidage vertical (20) et le moyen de guidage (45) coopérant de telle sorte que le moyen de retenue (40) est disposé dans le retrait de guidage (20) de manière réglable en hauteur par le biais du moyen de guidage (45) et qu'un mouvement de rotation du moyen de retenue (40) est empêché,
**caractérisé en ce que** le moyen de guidage (45) et le retrait de guidage (20) sont couplés par des moyens de retenue (25, 42) agissant magnétiquement, et **en ce que** le boîtier (10) présente, dans la zone de la section de guidage (11), une saillie (11b) dans laquelle le retrait de guidage (20) est disposé.

3. Réservoir (1) pour un poste de stockage et de distribution de médicaments selon l'une des revendications 1 ou 2, **caractérisé en ce que** le retrait de guidage (20) et le moyen de guidage (45) présentent des moyens d'encliquetage (43).

4. Réservoir (1) pour une station de stockage et de distribution de médicaments selon l'une des revendications 1 à 3, **caractérisé en ce que** l'espace de guidage (3) est de forme cylindrique circulaire et la surface du moyen de guidage (45) tournée vers l'espace de guidage (3) présente un contour cylindrique circulaire.
